(19) **Europäisches Patentamt / European Patent Office / Office européen des brevets**

(11) **EP 1 720 287 B1**

(12) **EUROPEAN PATENT SPECIFICATION**

(45) Date of publication and mention
of the grant of the patent:
**25.06.2008 Bulletin 2008/26**

(51) Int Cl.:
*H04L 12/26* (2006.01)     *H04L 12/56* (2006.01)

(21) Application number: **06113280.9**

(22) Date of filing: **28.04.2006**

(54) **Packet filtering**

Filtern von Paketen

Filtrage de paquets

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **04.05.2005 GB 0509079**

(43) Date of publication of application:
**08.11.2006 Bulletin 2006/45**

(73) Proprietor: **Psytechnics Ltd
Ipswich,
Suffolk IP1 1HN (GB)**

(72) Inventor: **Barrett, Paul
Ipswich, Suffolk IP5 3SN (GB)**

(74) Representative: **Copp, David Christopher et al
Dummett Copp,
25 The Square,
Martlesham Heath
Ipswich,
Suffolk, IP5 3SL (GB)**

(56) References cited:
**US-A- 5 959 976**     **US-A- 6 078 957**
**US-A- 6 158 008**

**Description**

This invention relates to a method and apparatus for filtering network packets. In particular to filtering network packets in order to decide whether a packet is processed by a particular processor.

Signals carried over telecommunications links can undergo considerable transformations, such as digitisation, encryption and modulation. They can also be distorted due to the effects of lossy compression and transmission errors.

Quality monitoring systems are currently under development which can be used to evaluate a systems performance. Passive monitoring systems monitor packets on a transmission path

A passive monitor monitors packets travelling in both directions between a source and a destination. In a multi processor monitor there is a filter at front of each of the processors to decide which packets are to be monitored.

In known monitoring methods, packets which are sent from a particular source to a particular destination may be processed by a different set of processors than those packets sent between that destination and that source.

In some applications it is desirable to process packets travelling in both directions between a particular destination and a particular source by the same processor.

One such example is where the packets represent a duplex path in a voice (or video) over IP connection and it is desirable to monitor the quality of that connection. It is necessary to monitor both transmissions in order to measure (for example) any echo which is present.

United States Patent No 5,959,976 discloses a method and sevice for filtering transmission addresses on the Ethernet for reducing the network loads for different groups in Ethernet. The problem addressed is the amount of memory required to store a large number of Ethernet MAC addresses in a switch (and what happens when the power fails, but this aspect is not relevant to the present invention). However, there is no mention of the problem addressing by the present invention, which is the requirement that packets travelling in both directions between a particular pair of source and destination addresses should be directed to the same processor.

United States Patent No 6,078,957 discloses a method and apparatus for monitoring packet loss activity in an internet Protocol network clustering system. Generation of a hash of an XOR combination of IP source and destination address for the purpose of, among other things, assigning the packet stream to a particular processor by means of filtering is also disclosed. However, again there is no mention of monitoring packets travelling in opposite directions or a way to solve the problem of making sure that packets travelling in opposite directions between the same source and destination addresses are routed to the same processor for analysis.

In this invention a filtering method is used such that packets which are transmitted in both directions between a particular source and a particular destination are processed by the same processor as each other in order to facilitate such monitoring.

According to the invention there is provided a method of determining packets to be processed by a processor comprising the steps of: monitoring a transmission link carrying packets in a first direction from a source to a destination; monitoring a transmission link carrying packets in a direction opposite to the first direction; selecting packets transmitted in either direction for processing using the sub-steps of a) selecting a portion of the source address and selecting a corresponding portion of the destination address of a transmitted packet; b) performing a commutative operation on the selected portions; and c) processing or discarding the packet in dependence upon the result of said commutative operation.

Preferably the step of selecting packets further comprises the sub-steps of d) selecting a further portion of the source address and selecting further corresponding portion of the destination address of said packet; e) performing a commutative operation on said further portions; and f) combining the results of step b) and step e); wherein the packet is processed or discarded at step c) in dependence upon the combined result determined at step f).

In a preferred embodiment the combining step f) is carried out using an exclusive or function.

In a preferred embodiment the commutative operation is carried out using an exclusive or function.

Preferably, the selected portions of the packet comprise the 16 most significant bits in a 32 bit source IP address, the 16 least significant bits in the 32 bit source IP address and a 16 bit UDP source port address, together with the corresponding portions of the 16 most significant bits in a 32 bit destination IP address, the 16 least significant bits in the 32 bit destination IP address and a 16 bit UDP destination port address.

In a preferred embodiment the packet is processed or discarded at step c) in dependence upon a modulo operation performed upon the result of the commutative operation.

Preferably the modulo operation is performed using a modulo divisor which is a prime number.

An embodiment of the invention will now be described, by way of example only, with reference to the accompanying drawings in which:

Figures 1a and 1b illustrate a monitor in a packet switched network;

Figure 2 illustrates a packet;

Figure 3 is a flow chart illustrating a method in accordance with the present invention;

Figure 4 illustrates schematically a packet switched network.

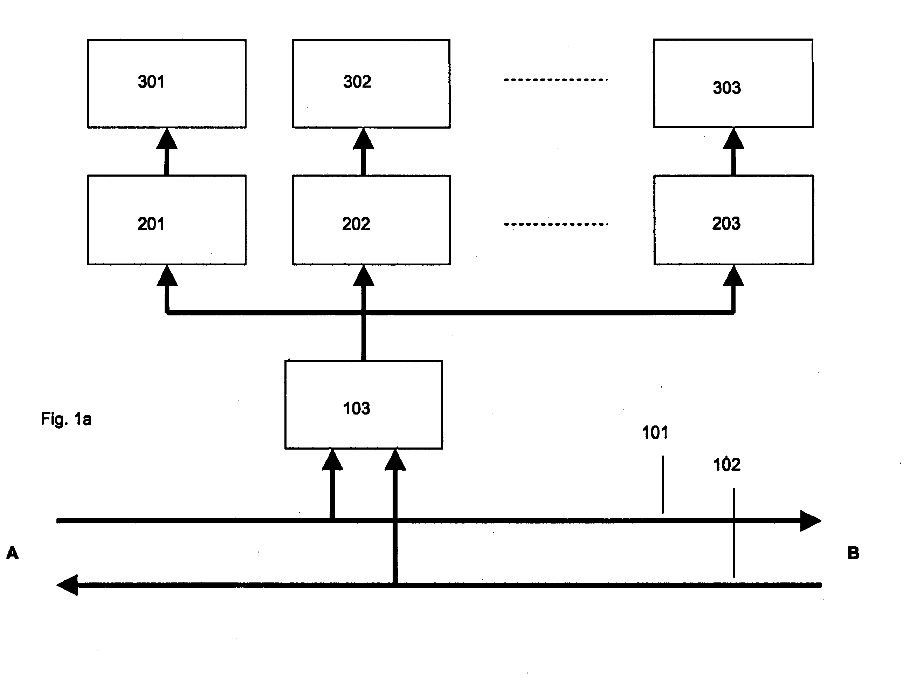

Referring now to Figure 1a, a transmission link 101 carries packets between a source A and a destination B. A transmission link 102 carries packets between source B and destination A. A monitoring point 103 makes copies of packets travelling on both transmission links 101, 102. Processors 301, 302, 303 each process a subset of the packets copied by the monitoring point 103.

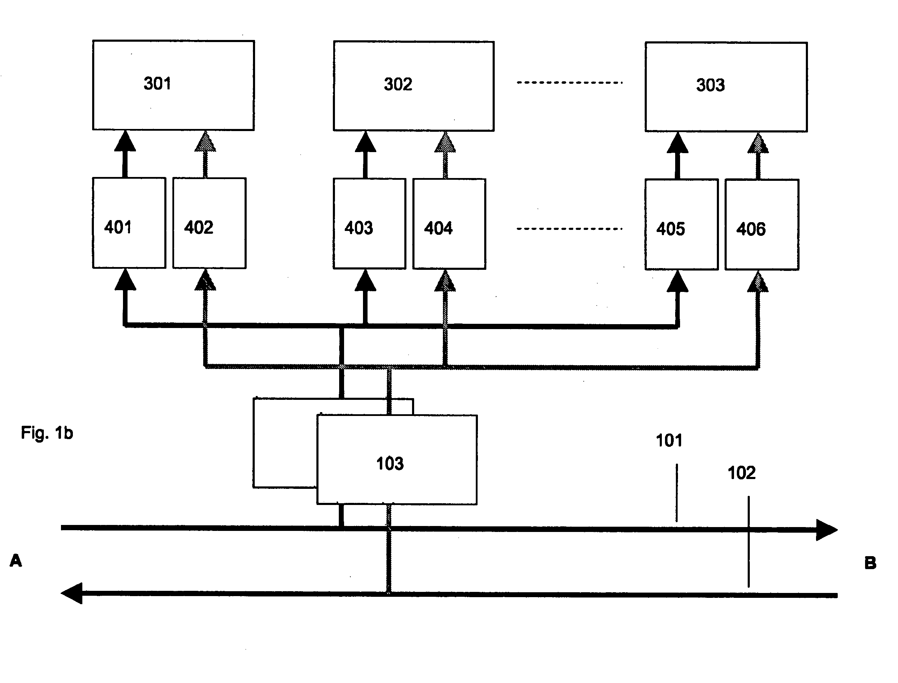

A packet filter 201, 202, 203 is associated with each processor. The packet filter 201 determines which packets are processed by processor 301. The packet filter 202 determines which packets are processed by processor 302. The packet filter 203 determines which packets are processed by processor 303. Alternatively there may be a separate filter for packets travelling on each transmission link. In Figure 1b packet filters 401, 402 determine which packets are processed by the processor 301. Packet filters 403, 404 determine which packets are processed by the processor 302 and packet filters 405, 406 determine which packets are processed by the processor 303.

In this description the term network refers to any interconnected set of transmission paths, the term packet filter refers to any device which selects which packets to process and which to discard. It will be understood that a filter may be implemented in hardware or in software or a combination of both hardware and software.

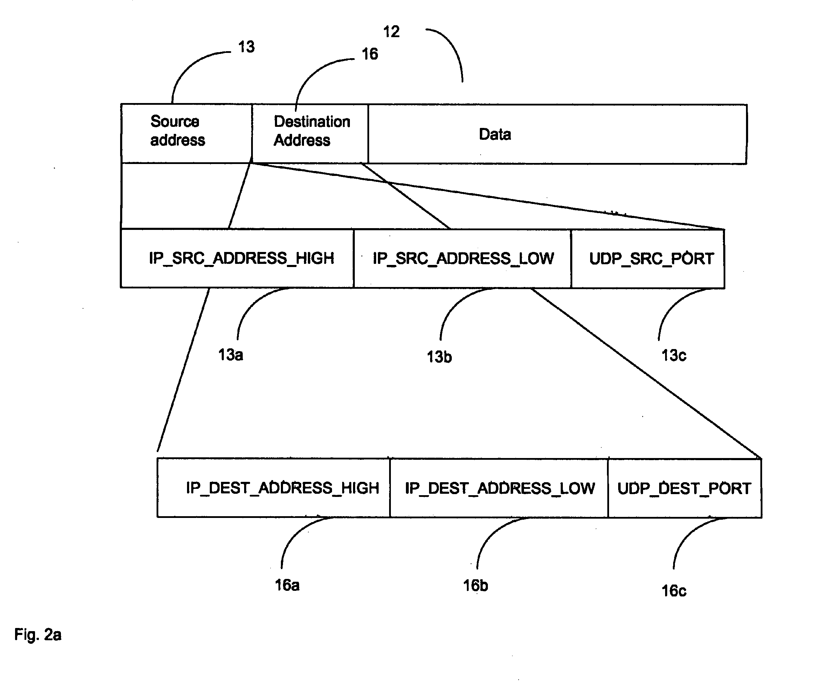

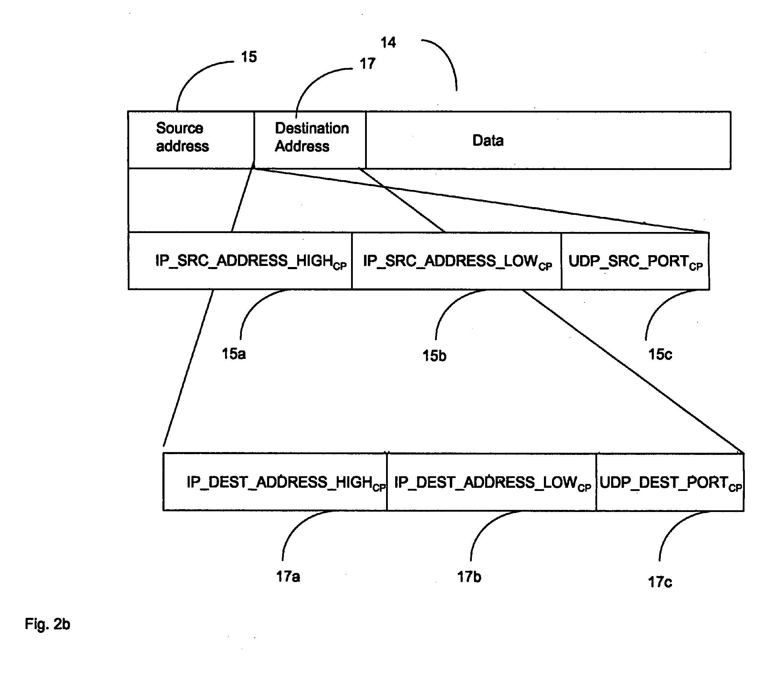

In a packet switched network each packet has a header which contains fields indicating the source and destination of the packet. For example the packet may contain Internet Protocol (IP) addresses and/or User Datagram Port (UDP) addresses. Figure 2 illustrates an example of such a packet 12.

When two packets represent transmission in opposite direction within the same call in a voice over IP transmission then the source field and the destination field contain complementary portions, such packets will be referred to as complementary packets.

For example, in Figure 2a if the source address 13 of a packet 12 contains fields IP_SRC_ADDRESS_HIGH 13a IP_SRC_ADDRESS_LOW 13b UDP_SRC_PORT 13c, where IP_SRC_ADDRESS_HIGH 13a represents the 16 most significant bits in a 32 bit IP address and IP_SRC_ADDRESS_LOW 13b represents the 16 least significant bits in the 32 bit IP address and UDP_SRC_PORT 13c represents a 16 bit UDP port address, then the destination address 17 of the complementary packet 14 (Figure 2b) will contain IP_DEST_ADDRESS_HIGH$_{cp}$ 15a IP_DEST_ADDRESS_LOW$_{cp}$ 15b UDP_DEST_PORT$_{cp}$ 15c

Where

$$IP\_SRC\_ADDRESS\_HIGH = IP\_DEST\_ADDRESS\_HIGH_{cp}$$

$$IP\_SRC\_ADDRESS\_LOW = IP\_DEST\_ADDRESS\_LOW_{cp} \text{ and}$$

$$UDP\_SRC\_PORT = UDP\_DEST\_PORT_{cp}$$

A pair of fields comprising the same portion of the source address 13 and destination address 16 within a single packet 12 (eg IP_SRC_ADDRESS_HIGH 13a and IP_DEST_ADDRESS_HIGH 16a) will be referred to as pairs of complementary portions.

In order to filter packets a filter value is calculated using the source address 13 and destination addresses 16 from a packet 12, and then the packet is either processed or discarded in dependence upon this filter value.

For example:

IF filter value < lower threshold OR filter value > upper threshold THEN discard packet.

Known methods of filtering/routing packets may involve performing a hash function on the source and/or destination addresses usually using modulo arithmetic. Such methods do not necessarily allow complementary packets (ie packets representing the same call) to follow the same route as one another.

In the method of the present invention a function is performed on the source and destination addresses in which the part of the function applied to pairs of complementary portions of the packet source and destinations addresses is commutative.

eg using the examples above the filter value may be formed from a combination of

```
IP_SRC_ADDRESS_HIGH + IP_DEST_ADDRESS_HIGH

IP_SRC_ADDRESS_LOW + IP_DEST_ADDRESS_LOW and

UDP_SRC_PORT    + UDP_DEST_PORT
```

or ∧

```
IP_SRC_ADDRESS_HIGH * IP_DEST_ADDRESS_HIGH

IP_SRC_ADDRESS_LOW * IP_DEST_ADDRESS_LOW and

UDP_SRC_PORT    * UDP_DEST_PORT
```

or

```
IP_SRC_ADDRESS_HIGH ^ IP_DEST_ADDRESS_HIGH

IP_SRC_ADDRESS_LOW ^ IP_DEST_ADDRESS_LOW and

UDP_SRC_PORT    ^ UDP_DEST_PORT
```

(where ^ represents the EXCLUSIVE OR function)

Alternatively different operators may be used for different pairs of complementary portions of the addresses, for example

```
IP_SRC_ADDRESS_HIGH + IP_DEST_ADDRESS_HIGH

IP_SRC_ADDRESS_LOW ^ IP_DEST_ADDRESS_LOW and

UDP_SRC_PORT    * UDP_DEST_PORT
```

The results of these commutative operations may be combined using either commutative or non commutative operators.

The result of such an operation is that the filter value is the same for complementary packets.

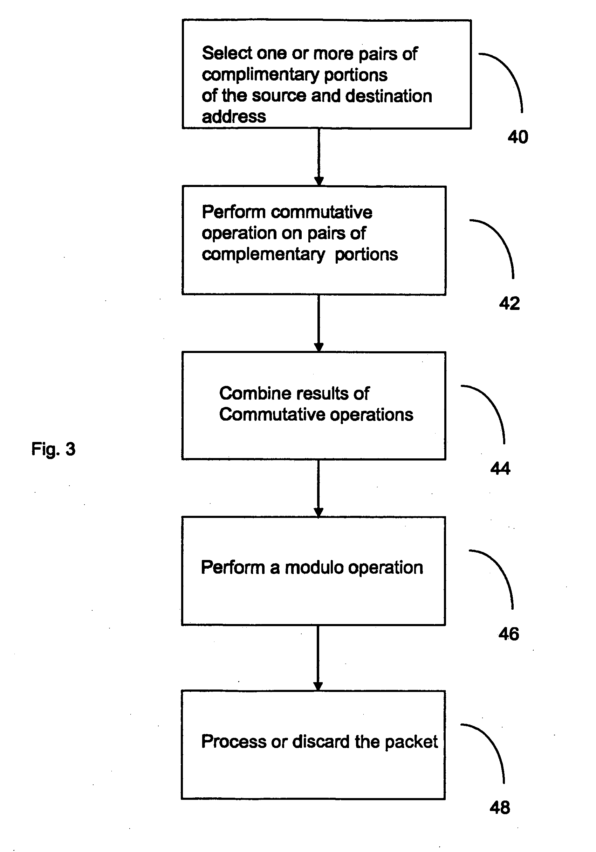

Figure 3 illustrates the method of the present invention. At step 40 one or more pairs of complementary portions of the source and destination address of the packet are selected. At step 42 a commutative operation is performed on each pair of selected complementary portions. At step 44 the results of the commutative operation(s) are combined to provide a filter value (clearly if a single pair of complementary portions is selected at step 40 then this step is unnecessary).

In order to aid load balancing between processors 301, 302, 303 at step 46 a modulo operation is performed on the filter value and at step 48 the packet is either processed or discarded depending upon the final result.

In a preferred embodiment of the present invention the filter value CHECK1 is calculated as follows:

```
CHECK1 = IP_SRC_ADDRESS_HIGH ^ IP_SRC_ADDRESS_LOW ^

IP_DEST_ADDRESS_HIGH ^ IP_DEST_ADDRESS_LOW ^

UDP_SRC_PORT   ^ UDP_DEST_PORT
```

ie the commutative operations and the combining operations are all performed using the EXCLUSIVE OR function.

A modulo operation is then applied to CHECK1 (step 48) to form a value CHECK2 that is derived from all of the bits in CHECK1

$$\texttt{CHECK2 = CHECK1 \% 251}$$

In the preferred embodiment a prime number is chosen which in this case is 251.

CHECK2 is then compared with an upper and lower limit. If the value of CHECK2 lies between the two limits, the packet is processed, otherwise the packet is discarded, i.e.:

$$\texttt{IF ( CHECK2 < LOWER || CHECK2 >> UPPER ) DISCARD PACKET}$$

CHECK2 is treated as an address space and each processor is allocated a subset of this address space. Note that the size of the subset need not be the same for all processors and the whole address space need not be covered, for example, if it is only desired to monitor a proportion of transmission paths. Furthermore if more than one type of monitoring process is desired then some portions of the address space may be selected by more than one filter. If separate filters are provided for packets travelling on different transmission lines, as illustrated in Figure 1b then the function applied and the upper and lower limit must be the same for each filter associated with a particular processor.

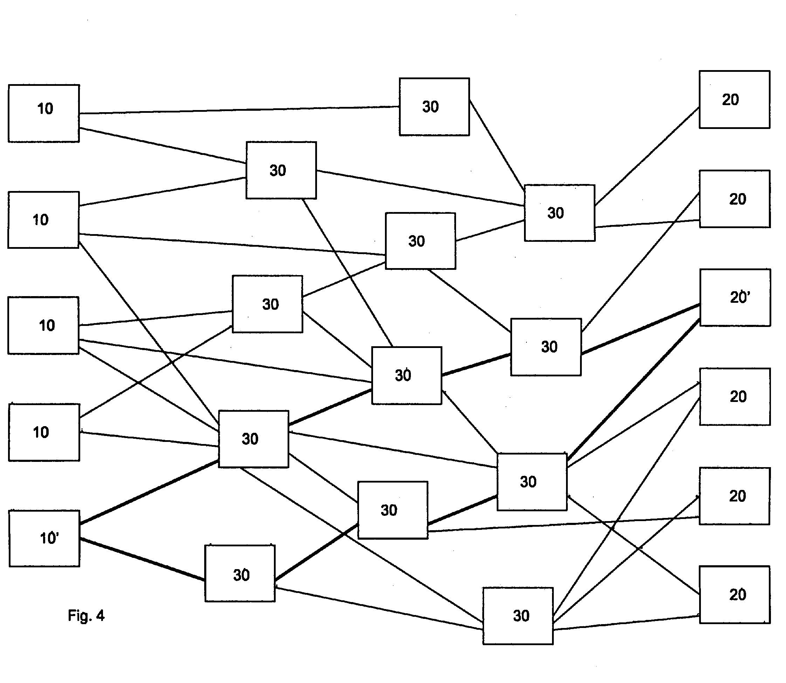

Figure 4 illustrates schematically a packet switched network connecting a plurality of sources 10 to a plurality of destinations 20 via a plurality of routers 30. It can be seen that there are a plurality of possible paths between a particular source 10' and destination 20'. For example two such routes are illustrated in bold.

It will be appreciated that the method of packet filtering described may also be used in a routing application to ensure that packets travelling in both directions between a particular source and a particular destination are routed via the same path as each other.

It will be understood by those skilled in the art that the processes described above may be implemented on a conventional programmable computer, and that a computer program encoding instructions for controlling the programmable computer to perform the above methods may be provided on a computer readable medium.

It will also be understood that various alterations, modifications, and/or additions may be introduced into the specific embodiment described above without departing from the scope of the present invention as defined in the following claims.

**Claims**

1. A method of determining packets to be processed by a processor comprising the steps of:

   monitoring a transmission link carrying packets in a first direction from a source to a destination;
   monitoring a transmission link carrying packets in a direction opposite to the first direction; **characterised in that** the method further comprises the step of
   selecting packets transmitted in either direction for processing using the sub-steps of

   a) selecting (40) a portion of the source address and selecting the same corresponding portion of the destination address of a transmitted packet;
   b) performing (42) a commutative operation on the selected portions; and
   c) processing or discarding (48) the packet in dependence upon the result of said commutative operation.

2. A method according to claim 1, in which the step of selecting packets further comprises the sub-steps of

   d) selecting (40) a further portion of the source address and selecting further same corresponding portion of the destination address of said packet;
   e) performing (42) a commutative operation on said further portions; and
   f) combining (44) the results of step b) and step e); wherein the packet is processed or discarded at step c) in dependence upon the combined result determined at step f).

3. A method according to claim 2 in which the combining step f) is carried out using an exclusive or function.

4. A method according to any one of the preceding claims, in which the commutative operation is carried out using an exclusive or function.

5. A method according to any ane of the preceding claims, in which the selected portions of the packet (12) comprise the 16 most significant bits (13a) in a 32 bit source IP address, the 16 least significant bits (13b) in the 32 bit source IP address and a 16 bit UDP source port address (13c), together with the same corresponding portions of the 16 most significant bits (16a) in a 32 bit destination IP address, the 16 least significant bits (16b) in the 32 bit destination IP address and a 16 bit UDP destination port address (16c).

6. A method according to any one of the preceding claims wherein the packet is processed or discarded at step c) in dependence upon a modulo operation performed upon the result of the commutative operation.

7. A method according to claim 6 in which the modulo operation is performed using a modulo divisor which is a prime number.

8. A method according to claim 7, in which the modulo operation is performed using the number 251.

9. A packet monitor using a plurality of processors (301, 302, 303) to monitor packets, in which each processor is arranged in operation to select packets to be processed using all the steps of the method according to any one of the preceding claims.

10. A computer readable medium carrying a computer program for implementing all the steps of the method according to any one of claims 1 to 8.

11. A computer program for implementing all the steps of the method according to any one of claims 1 to 8.

**Patentansprüche**

1. Verfahren zum Bestimmen von durch einen Prozessor zu verarbeitenden Paketen, mit den folgenden Schritten:

Überwachen einer Übertragungsstrecke, die Pakete in einer ersten Richtung von einer Quelle zu einem Ziel führt; Überwachen einer Übertragungsstrecke, die Pakete in einer der ersten Richtung entgegengesetzten Richtung führt; **dadurch gekennzeichnet, daß** das Verfahren ferner den folgenden Schritt umfaßt:

Auswählen von in einer der Richtungen übertragenen Paketen für die Verarbeitung unter Verwendung der folgenden Teilschritte:

a) Auswählen (40) eines Teils der Quellenadresse und Auswählen desselben entsprechenden Teils der zieladresse eines übertragenen Pakets;
b) Ausführen (42) einer kommutativen Operation an den gewählten Teilen; und
c) Verarbeiten oder Verwerfen (48) des Pakets in Abhängigkeit von dem Ergebnis der kommutativen Operation.

2. Verfahren nach Anspruch 1, bei dem der Schritt des Auswählens von Paketen ferner die folgenden Teilschritte umfaßt:

d) Auswählen (40) eines weiteren Teils der Quellenadresse und Auswählen desselben weiteren entsprechenden Teils der Zieladresse des Pakets;
e) Ausführen (42) einer kommutativen Operation an den weiteren Teilen; und
f) Kombinieren (44) der Ergebnisse von Schritt b) und Schritt e);

wobei das Paket im Schritt c) abhängig von dem im Schritt f) bestimmten kombinierten Ergebnis verarbeitet oder verworfen wird.

3. Verfahren nach Anspruch 2, bei dem der Schritt des Kombinierens f) unter Verwendung einer Exklusiv-oder-Funktion ausgeführt wird.

**4.** Verfahren nach einem der vorhergehenden Ansprüche, bei dem die kommutative Operation unter Verwendung einer Exklusiv-oder-Funktion ausgeführt wird.

**5.** Verfahren nach einem der vorhergehenden Ansprüche, bei dem die gewählten Teile des Pakets (12) die 16 höchstwertigen Bit (13a) in einer 32-Bit-Quellen-IP-Adresse, die 16 niedrigstwertigen Bit (13b) in der 32-Bit-Quellen-IP-Adresse und eine 16-Bit-UDP-Quellenportadresse (13c) zusammen mit denselben entsprechenden Teilen der 16 höchstwertigen Bit (16a) in einer 32-Bit-Ziel-IP-Adresse, der 16 niedrigstwertigen Bit (16b) in der 32-Bit-Ziel-IP-Adresse und einer 16-Bit-ilDP-zielportadresse (16c) umfassen.

**6.** Verfahren nach einem der vorhergehenden Ansprüche, wobei das Paket im Schritt c) abhängig von einer an dem Ergebnis der kommutativen Operation ausgeführten Modulo-Operation verarbeitet oder verworfen wird.

**7.** Verfahren nach Anspruch 6, bei dem die Modulo-Operation unter Verwendung eines Modulo-Divisors ausgeführt wird, der eine Primzahl ist.

**8.** Verfahren nach Anspruch 7, bei dem die Modulo-Operation unter Verwendung der Zahl 251 ausgeführt wird.

**9.** Paketüberwachungsvorrichtung mit mehreren Prozessoren (301, 302, 303) zum Überwachen von Paketen, bei der jeder Prozessor im Betrieb dafür ausgelegt ist, zu verarbeitende Pakete unter Verwendung aller Schritte des Verfahrens nach einem der vorhergehenden Ansprüche auszuwählen.

**10.** Computerlesbares Medium, das ein Computerprogramm zum Implementieren aller Schritte des Verfahrens nach einem der Ansprüche 1 bis 8 trägt.

**11.** Computerprogramm zum Implementieren aller Schritte des Verfahrens nach einem der Ansprüche 1 bis 8.


**Revendications**

**1.** Procédé pour déterminer des paquets à traiter par un processeur comprenant les étapes consistant à :

surveiller une liaison de transmission transportant des paquets dans une première direction à partir d'une source vers une destination ;
surveiller une liaison de transmission transportant des paquets dans une direction opposée à la première direction ; **caractérisé en ce que** le procédé comprend, de plus, les étapes consistant à
sélectionner les paquets transmis dans l'une ou l'autre des directions pour le traitement en utilisant les sous-étapes consistant à

a) sélectionner (40) une portion de l'adresse source et sélectionner la même portion correspondante de l'adresse de destination d'un paquet transmis ;
b) effectuer (42) une opération de commutation sur les portions sélectionnées ; et
c) traiter ou rejeter (48) le paquet en fonction du résultat de ladite opération de commutation.

**2.** Procédé selon la revendication 1, dans laquelle l'étape de sélection des paquets comprend, de plus, les sous-étapes consistant à

d) sélectionner (40) une portion supplémentaire de l'adresse source et sélectionner, de plus, la même portion supplémentaire correspondante de l'adresse de destination dudit paquet ;
e) effectuer (42) une opération de commutation sur lesdites autres portions ; et
f) combiner (44) les résultats de l'étape b) et de l'étape e) ;

dans lequel le paquet est traité ou rejeté à l'étape c) en fonction du résultat combiné déterminé à l'étape f).

**3.** Procédé selon la revendication 2, dans lequel l'étape de combinaison f) est effectuée en utilisant une fonction ou un exclusif.

**4.** Procédé selon l'une quelconque des revendications précédentes, dans lequel l'opération de commutation est effectuée en utilisant un exclusive ou une fonction.

**5.** Procédé selon l'une quelconque des revendications précédentes, dans lequel les portions sélectionnées du paquet (12) comprennent les 16 bits les plus lourds (13a) dans une adresse IP de source à 32 bits, les 16 bits les moins lourds (13b) dans l'adresse IP de source à 32 bits et une adresse de port de source UDP à 16 bits (13c), conjointement avec les mêmes portions correspondantes des 16 bits les plus lourds (16a) dans une adresse IP de destination à 32 bits, les 16 bits les moins lourds (16b) dans l'adresse IP de destination à 32 bits et une adresse de port de destination UDP à 16 bits (16c).

**6.** Procédé selon l'une quelconque des revendications précédentes, dans lequel le paquet est traité ou rejeté à l'étape c) en fonction d'une opération modulo effectuée sur le résultat de l'opération de commutation.

**7.** Procédé selon la revendication 6, dans lequel l'opération modulo est effectuée en utilisant un diviseur modulo qui est un nombre premier.

**8.** Procédé selon la revendication 7, dans lequel l'opération modulo est effectuée en utilisant le nombre 251.

**9.** Dispositif de surveillance de paquets en comprenant une pluralité de processeurs (301, 302, 303) pour surveiller les paquets, dans lequel chaque processeur est apte, dans le fonctionnement, à sélectionner des paquets à traiter en utilisant toutes les étapes du procédé selon l'une quelconque des revendications 1 à 8.

**10.** Support lisible par un ordinateur comportant un programme d'ordinateur pour la mise en place de toutes les étapes du procédé selon l'une quelconque des revendications 1 à 8.

**11.** Programme d'ordinateur pour la mise en place de toutes les étapes du procédé selon l'une quelconque des revendications 1 à 8.

Fig. 1a

Fig. 1b

| Source address | Destination Address | Data |
|---|---|---|

| IP_SRC_ADDRESS_HIGH | IP_SRC_ADDRESS_LOW | UDP_SRC_PORT |
|---|---|---|

13a                    13b                    13c

| IP_DEST_ADDRESS_HIGH | IP_DEST_ADDRESS_LOW | UDP_DEST_PORT |
|---|---|---|

16a                    16b                    16c

Fig. 2a

| Source address | Destination Address | Data |
|---|---|---|

| IP_SRC_ADDRESS_HIGH$_{CP}$ | IP_SRC_ADDRESS_LOW$_{CP}$ | UDP_SRC_PORT$_{CP}$ |
|---|---|---|

15a          15b          15c

| IP_DEST_ADDRESS_HIGH$_{CP}$ | IP_DEST_ADDRESS_LOW$_{CP}$ | UDP_DEST_PORT$_{CP}$ |
|---|---|---|

17a          17b          17c

**Fig. 2b**

Fig. 3

Select one or more pairs of
complimentary portions
of the source and destination
address

40

Perform commutative
operation on pairs of
complementary portions

42

Combine results of
Commutative operations

44

Perform a modulo operation

46

Process or discard the packet

48

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5959976 A
- US 6078957 A